# EUROPÄISCHE PATENTSCHRIFT

(11) **EP 2 087 245 B1**
(45) Veröffentlichungstag und Bekanntmachung des Hinweises auf die Patenterteilung: **02.03.2011**
(21) Anmeldenummer: 07856282.4
(22) Anmeldetag: 28.11.2007
(51) Int. Cl.: F16B 19/10

(54) **NIET**
RIVET
RIVET

(30) Priorität: 30.11.2006 AT 19872006
(43) Veröffentlichungstag der Anmeldung: 12.08.2009
(73) Patentinhaber: Singh, Sumanjit, 85080 Gaimersheim (DE)
(72) Erfinder: KHALIL, Ziad, 5280 Braunau am Inn (AT)
(74) Vertreter: Wirnsberger, Gernot
(86) Internationale Anmeldenummer: PCT/EP2007/010317
(87) Internationale Veröffentlichungsnummer: WO 2008/064875

(56) Entgegenhaltungen:
- EP-A- 0 398 403
- EP-A- 1 369 601
- CH-A- 486 644
- GB-A- 1 604 502
- US-A- 3 065 661
- US-A- 3 178 989
- US-A- 4 810 141

## Beschreibung

Die Erfindung betrifft einen Niet zum Verbinden von Werkstücken, insbesondere Blindniet, aufweisend eine Hülse mit einem Schaft und einem verbreiterten Setzkopf sowie einen Nietdorn mit einem Kopf, wobei ein dem Setzkopf gegenüberliegendes Ende des Schaftes gegebenenfalls durch Einziehen des Nietdornes in die Hülse zu einem Schließkopf verformbar ist.

Ein derartiger niet ist z.B. aus dem Dokument US.A. 3 065 661 bekannt.

Wenn es gilt, Bleche oder Platten miteinander zu verbinden, stellen Niete oftmals Verbindungsmittel der Wahl dar. Dies trifft insbesondere zu, wenn Teile aus unterschiedlichen Werkstoffen miteinander verbunden werden sollen und ein Schweißen, Löten oder Kleben nicht möglich ist oder nur zu unbefriedigenden Ergebnissen führt. Dabei sind vor allem Niete gefragt, mit welchen hochbelastbare, langlebige Verbindungen erreichbar sind.

In einer sehr einfachen und gängigen Form sind Niete einteilig als hülsenförmige Hohlniete mit einem hohlen Schaft und einem daran anschließenden verbreiterten Setzkopf ausgebildet. Zur Ausbildung eines gesetzten Nietes ist es dann lediglich erforderlich, das dem Setzkopf gegenüberliegende Ende des Schaftes durch Kraftaufbringung zu einem Schließkopf zu verformen. Derartige Niete werden insbesondere auch zum Verbinden nicht metallischer Werkstoffe eingesetzt. Dies ist jedoch nur möglich, wenn die Werkstücke von beiden Seiten zugänglich sind. Andernfalls ist man auf Blindniete angewiesen.

Blindniete sind mehrteilig aufgebaut. Zum einen umfasst ein Blindniet ähnlich einem Hohlniet eine Hülse mit einem hohlen Schaft, welcher an einem Ende einen verbreiterten Setzkopf aufweist. Zum anderen erfordert ein Blindniet zusätzlich einen Nietdorn, damit trotz eingeschränkter einseitiger Zugänglichkeit der Werkstücke ein Schließkopf formbar ist. Der Nietdorn ist beispielsweise zylinderförmig ausgeformt und weist einen verbreiterten Kopf auf, dessen äußerer Durchmesser höchstens einem Außendurchmesser des Schaftes entspricht. Der Nietdorn ist dabei so dimensioniert, dass er in den hohlen Schaft der Hülse einführbar und durch diesen einziehbar ist. Der Niet kann dann von einer Seite eingeschoben und gesetzt werden. Beim Setzen kommt der verbreiterte Kopf des Nietdornes am dem Setzkopf gegenüberliegenden Ende der Hülse zur Anlage und verformt dieses auf Grund der ausgeübten Zugkraft bzw. einer auf den Schaft wirkenden Kraft zu einem Schließkopf.

Eine Anwendung solcher Niete zur Herstellung von Verbindungen zwischen Werkstücken setzt voraus, dass in die Werkstücke entsprechende Bohrungen zur Aufnahme der Niete eingebracht sind. Diese Bohrungen sollen so bemessen sein, dass ein Schaft der Hülse nach dem Setzen an den Bohrungswänden möglichst vollflächig anliegt. Ansonsten, wenn dies nicht der Fall ist, haben die Werkstücke zum Schaft bzw. der Hülse hin ein Spiel, was bei höheren Schubkräften dazu führt, dass insbesondere bei Wechselbelastungen die Nietverbindung gelockert wird und letztendlich vorzeitig versagt.

In Bezug auf diese Forderung nach einer möglichst exakten Fertigung von Bohrungsdurchmessern zur Aufnahme einer Hülse ergeben sich jedoch Probleme: Eine besondere Problematik liegt darin, dass es schwierig ist, in verschiedene Werkstücke, insbesondere wenn diese aus unterschiedlichen Werkstoffen bestehen, Bohrungen einzubringen, deren Bohrungsdurchmesser sich nur in einer zulässigen Toleranz von wenigen Hundertstel Millimetern unterscheiden. Diese Problematik tritt insbesondere zutage, wenn für einzelne Konstruktionen, beispielsweise im Flugzeugbau, Zigtausende Niete zu setzen und dementsprechend viele Bohrungen vorzusehen sind.

Bei Blindnieten ist die vorstehende Problematik noch zusätzlich verstärkt. Blindniete werden wie erwähnt dann eingesetzt, wenn die zu verbindenden Werkstücke nur von einer Seite aus zugänglich sind. Damit Niete dieser Art vor dem Setzen in die Bohrungen eingeschoben werden können, darf ein Außendurchmesser des Kopfes eines Nietdornes höchstens einem maximalen Außendurchmesser des Schaftes der Hülse entsprechen. Aus diesem Grund ist ein Durchmesser des Nietdornkopfes limitiert, was sich ungünstig auf einen Kraftschluss zwischen den Werkstücken auswirken kann (niedrige Flächenpressung). Bei Belastungen ist daher ein Lösen einer Verbindung noch eher möglich und umso wichtiger ist eine exakte Fertigung von Bohrungsdurchmessern.

Zur Lösung der vorstehenden Problematik wurde schon vorgeschlagen, Bohrungen auszureiben und so auf etwa gleichen Durchmesser zu bringen. Wenngleich dies als brauchbarer Ansatz gesehen werden kann, um zu höher belastbaren Verbindungen zu kommen, so ist doch nachteilig, dass Reiboperationen einen hohen Arbeitsaufwand erfordern und insbesondere in gängigen Anwendungsgebieten von Nieten, beispielsweise im Flugzeugbau, daher äußerst unpraktikabel erscheinen.

Ausgehend vom Stand der Technik setzt sich die Erfindung das Ziel, einen Niet der eingangs genannten Art anzugeben, bei welchem das Problem eines Spiels zwischen Hülse und Werkstücken nach Setzen des Nietes vermieden oder zumindest weitgehend verringert ist.

Das Ziel der Erfindung, einen Niet anzugeben, bei welchem das Problem eines Spiels zwischen Hülse und Werkstücken nach Setzen des Nietes vermieden oder zumindest weitgehend verringert ist, wird bei einem gattungsgemäßen Niet erreicht, wenn im Schaft zumindest eine axial verlaufende Einbuchtung und/oder zumindest ein axial verlaufender Schlitz vorgesehen sind, welche Einbuchtung bzw. welcher Schlitz beim Setzen des Nietes ein radiales Aufweiten des Schaftes der Hülse zu den Werkstücken hin bewirkt.

Mit einem erfindungsgemäßen Niet kann vorteilhafterweise beim Setzen desselben ein Spalt zwischen Hülse und Werkstücken überbrückt werden. Auf Grund der vorgesehenen axial verlaufenden Einbuchtung oder des dergleichen Schlitzes weist ein Schaft im Vergleich mit bekannten Lösungen eine herabgesetzte Beul- und Knicksteifigkeit auf. Wird nun beispielsweise beim Setzen eines Blindnietes über einen Kopf eines Nietdornes eine Kraft auf die Hülse aufgebracht, so verformt sich diese infolge einer herabgesetzten Beul- und Knicksteifigkeit radial nach außen, wodurch die Hülse an den Werkstücken zur Anlage kommt und Spalte zwischen Hülse und Werkstücken überbrückt werden.

Gleichzeitig und/oder anschließend sorgt die Aufbringung einer Kraft am Hülsenende in bekannter Weise für die Ausbildung eines Schließkopfes. Somit kommt es bei Einsatz eines erfindungsgemäßen Nietes einerseits zur Ausbildung einer kraftschlüssigen Verbindung, durch welche die Werkstücke zusammengehalten werden. Die mit dem Setzvorgang einhergehende gezielte Ausbeulung des Schaftes ergibt andererseits simultan eine unmittelbare Verbindung zwischen Werkstücken und Schaft. Ein laterales Verschieben der Werkstücke bei Belastung ist damit unterbunden und eine Belastbarkeit einer Nietverbindung daher erhöht.

Die zumindest eine Einbuchtung und/oder der zumindest eine Schlitz können am Schaft außenseitig angeordnet sein. Dies ist insbesondere bei Schäften mit kleinen Durchmessern empfehlenswert, da in diesem Fall Einbuchtungen bzw. Schlitze außenseitig wesentlich einfacher in die Hülse einformbar sind als innenseitig.

Ebenso kann jedoch vorgesehen sein, dass die Einbuchtung und/oder der Schlitz innenseitig angeordnet sind. Eine innenseitige Anordnung von Einbuchtungen/Schlitzen hat den Vorteil, dass eine Beul- und Knicksteifigkeit des Schaftes herabgesetzt wird, zugleich aber eine äußere Oberfläche des Schaftes, über welche ein Kontakt zu den Werkstücken hergestellt wird, flächenmäßig unverändert bleibt.

Eine Zahl der Einbuchtungen und/oder Schlitze ist variabel und kann in Abhängigkeit der mechanischen Eigenschaften des verwendeten Werkstoffs angepasst werden.

Zweckmäßig ist es, dass der Schaft zumindest zwei, insbesondere drei oder mehr, Einbuchtungen und/oder Schlitze aufweist, um eine Verformbarkeit desselben zu fördern.

Um über den gesamten Querschnitt des Schaftes eine gleichmäßige Aufweitung desselben zu bewirken, können mehrere Einbuchtungen und/oder Schlitze vorgesehen sein, welche parallel zur Hülsenachse verlaufen und vorzugsweise rotationssymmetrisch um diese angeordnet sind.

Damit die Wirkungen einer herabgesetzten Beul- und Knicksteifigkeit besonders effektiv zum Tragen kommen, verlaufen die Einbuchtungen und/oder Schlitze etwa von jenem Bereich weg, in welchem der Schaft an den Setzkopf anschließt. Bevorzugt kann es sein, dass die Einbuchtungen und/oder Schlitze im Wesentlichen nur über jenen Bereich des Schaftes verlaufen, der nicht für eine Schließkopfbildung benötigt wird.

Günstig kann es weiter sein, dass die Hülse außenseitig zumindest eine vorzugsweise radial umfänglich verlaufende Sollbruchstelle derart aufweist, dass durch Einwirken einer Kraft in Richtung der Hülsenachse ein endseitiger Teil der Hülse um einen verbleibenden Teil der Hülse herum axial verschiebbar ist. Wenn diese konstruktive Maßnahme vorgesehen ist, wird beim Setzen eines Nietes die Hülse gebrochen, der endseitige Teil über den verbleibenden Teil der Hülse geschoben und bei weiterem Einziehen des Nietdornes, noch vor Ausbildung eines Schließkopfes, eine Kraft auf die Werkstücke ausgeübt, sodass diese zusammengedrückt und ein allfälliger vertikaler Spalt zwischen den Werkstücken geschlossen wird. Nach Schließen des vertikalen Spaltes zwischen den Werkstücken erfolgt auf Grund der vorgesehenen Einbuchtungen und/oder Schlitze ein Ausbeulen der Hülse, sodass diese an den Werkstücken anliegt. Zusätzlich wird ein Schließkopf ausgebildet. Das Ergebnis ist eine besonders belastbare und langlebige Verbindung, da sowohl ein vertikales Spiel zwischen den Werkstücken als auch ein laterales Spiel zwischen Werkstücken und Hülse beseitigt ist.

Alternativ dazu kann auch vorgesehen sein, dass die Hülse außenseitig zumindest eine vorzugsweise radial umfänglich verlaufende Sollverformungsstelle derart aufweist, dass durch Einwirken einer Kraft in Richtung der Hülsenachse ein endseitiger Teil der Hülse unter Ausbildung eines Kegelstumpfes um den verbleibenden Teil der Hülse herum verformbar ist. Bei dieser Konstruktion sorgt beim Setzen eines Nietes der ausgebildete Kegelstumpf für ein Zusammenrücken der Werkstücke und damit für ein Schließen eines vertikalen Spaltes zwischen den Werkstücken.

Bei Ausführung eines Nietes mit einem Nietdorn ist es besonders bevorzugt, wenn der Nietdorn außenseitig Rippen aufweist, welche die Hülse beim Einziehen des Nietdornes radial aufweiten. Ein Aufweiten der Hülse beim Setzen des Nietes und somit eine gute Flächenpressung zwischen den Werkstücken und der Hülse wird dadurch zusätzlich unterstützt. Daneben ist in diesem Fall auch eine hohe Flächenpressung zwischen der Hülse und dem Nietdorn gegeben, sodass sowohl an den Verbindungsflächen Werkstücke/Hülse als auch Hülse/Nietdorn eine hohe Flächenpressung gegeben ist. Dies wird auch dadurch begünstigt, dass beim Aufweiten der Hülse, sobald diese an den Werkstücken anstößt, Hülsenwerkstoff zwischen die Rippen des Nietdornes einfließen kann, was zusätzlich einen Kaltverfestigungseffekt bewirken kann.

Werden Nietdorne mit außenseitigen Rippen eingesetzt, so kann eine Belastbarkeit der Verbindung noch weiter gesteigert werden, wenn der Nietdorn massiv ausgebildet ist und somit sehr hohen Belastungen standhalten kann.

Zweckmäßigerweise sind bei Einsatz von Nietdomen mit außenseitigen Rippen und bei einem Schaft mit mehreren Einbuchtungen und/oder Schlitzen die einzelnen Teile des Nietes so zusammengesetzt, dass die Rippen an der Hülse in Bereichen zwischen den Einbuchtungen und/oder Schlitzen anliegen. Dadurch können die durch die Einbuchtungen und/oder Schlitze sowie die Rippen erzielten Effekte ihre volle Wirkung entfalten.

Insbesondere für einen Blindniet, dessen Einzelteile bereits zusammengesetzt in die Bohrungen eingeführt werden müssen, empfiehlt es sich, dass die Hülse endseitig Führungsnasen für die Rippen aufweist. Der Nietdorn kann dann mit geringer Kraft in der Hülse festgeklemmt und mit wunschgemäßer Positionierung von Hülse und Nietdorn in die Bohrungen eingeführt werden.

Die Rippen schließen bevorzugt am Kopf des Nietdornes an, damit sie sich im gesetzten Zustand des Nietes über die volle Länge der Bohrungen erstrecken können. Um eine Zugkraft für das Einziehen eines Nietdornes möglichst gering zu halten, kann auch vorgesehen sein, dass die Rippen keilförmig ausgebildet sind. Diesbezüglich ist es zweckmäßig, dass die Rippen mit einer an sich parallel zum Nietdorn verlaufenden Kontur ausgebildet sind, an welche Kontur zum Setzkopf hin ein keilförmiger Abschnitt bzw. Keilflächen anschließt.

Weitere Vorteile und Wirkungen der Erfindung ergeben sich aus dem Zusammenhang der Beschreibung sowie den nachfolgenden Ausführungsbeispielen. Es versteht sich für den Fachmann, dass sich einzelne Merkmale der nachfolgenden Ausführungsbeispiele, auch wenn sie in Kombination mit weiteren Merkmalen genannt sind, mit der vorangehend dargestellten allgemeinen Lehre der Erfindung verbinden lassen.

Nachfolgend ist die Erfindung anhand von Ausführungsbeispielen noch weitergehend erläutert. Es zeigen:
Fig. 1 einen erfindungsgemäßen Niet in teilweise querschnittlicher Darstellung;
Fig. 2 einen Schaft eines erfindungsgemäßen Nietes im Querschnitt;
Fig. 3 einen erfindungsgemäßen Niet, dessen Schaft innenseitig Schlitze aufweist, in teilweise querschnittlicher Darstellung;
Fig. 4 einen Schaft eines Nietes gemäß Fig. 3 im Querschnitt;
Fig. 5a einen erfindungsgemäßen Niet, dessen Hülse außenseitig eine Sollbruchstelle aufweist, in teilweise querschnittlicher Darstellung;
Fig. 5b den Niet aus Fig. 5a nach Beginn, jedoch vor Beendigung des Setzvorganges;
Fig. 6a einen erfindungsgemäßen Niet, dessen Hülse außenseitig Sollverformungsstellen aufweist, in teilweise querschnittlicher Darstellung;
Fig. 6b den Niet aus Fig. 6a während eines Setzvorganges, jedoch vor Beendigung desselben in teilweise querschnittlicher Darstellung.

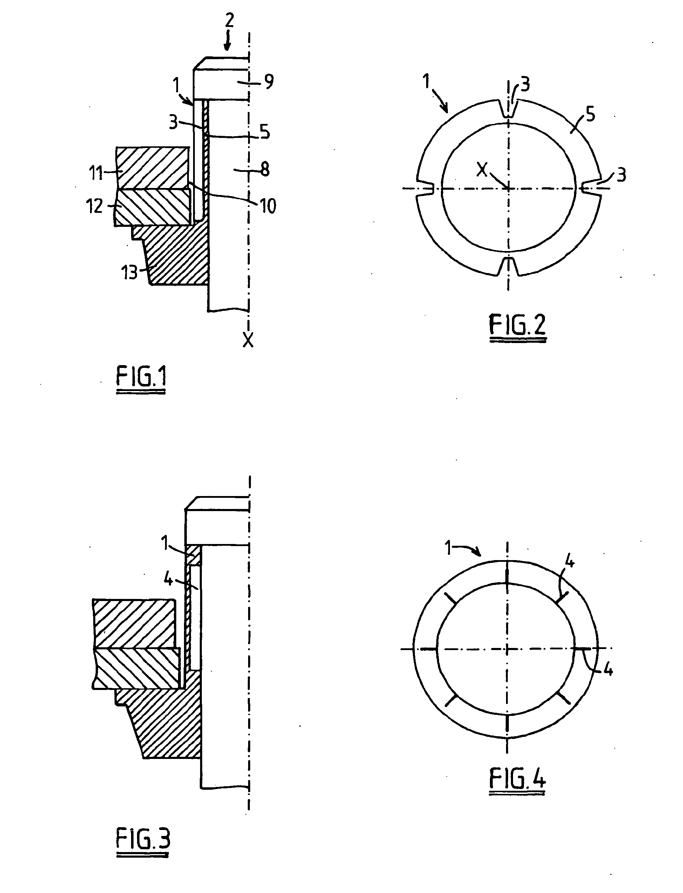

In Fig. 1 ist in teilweise querschnittlicher Darstellung ein erfindungsgemäßer Niet 2 in Blindnietausführung dargestellt. Der Niet 2 umfasst eine Hülse 1, an deren Schaft 5 integral ein verbreiterter Setzkopf 13 angeformt ist. Bei der in Fig. 1 dargestellten Situation dient der Niet 2 dazu, zwei Werkstücke 11, 12 miteinander zu verbinden. Hierzu sind die Werkstücke 11, 12 jeweils mit einer Bohrung versehen, was dazu führen kann, dass zwischen der Hülse 1 und den Werkstücken 11, 12 ein radialer Spalt 10, gegebenenfalls auch Spalte unterschiedlicher Größe, bestehen. Wird nun, ausgehend von der in Fig. 1 dargestellten Lage, der Niet 2 durch Ausübung einer Zugkraft entlang einer Achse X des Nietdornes 8 gesetzt, so verformt sich die Hülse 1 bei Kontakt mit einem Kopf 9 des Nietdornes 8 im Bereich des Schaftes 5 zuerst radial nach außen und schließt den Spalt 10 zu den Werkstücken 11 bzw. 12. Diese Verformung in radialer Richtung wird durch außenseitige Einbuchtungen 3 im Schaft 5 der Hülse 1 erreicht, da die Einbuchtungen 3 zu einer Herabsetzung einer Beul- und Knicksteifigkeit des Schaftes 5 führen. Die Einbuchtungen 3 beginnen etwa im Bereich des Setzkopfes 13 und haben eine Länge, die zumindest einer Summe der Werkstückdicken entspricht. So ist sichergestellt, dass sowohl ein Spalt 10 zwischen Hülse 1 und Werkstück 11 als auch zwischen Hülse 1 und Werkstück 12 geschlossen wird. Eine analoge Abfolge ist gegeben, wenn der Kopf 9 des Nietdornes 8 breiter als die Bohrungen ausgebildet ist, was der Fall sein kann, wenn die Werkstücke 11, 12 beidseitig zugänglich sind.

In Fig. 2 ist ein Querschnitt eines Schaftes 5 gemäß Fig. 1 näher dargestellt. Der zylindrische Schaft 5 ist außenseitig mit vier Einbuchtungen 3 versehen, welche zueinander jeweils um 90° versetzt sind. Dementsprechend sind die Einbuchtungen 3 rotationssymmetrisch um eine Achse X der Hülse 1 angeordnet. Um eine möglichst gleichmäßige Aufweitung der Hülse 1 nach allen Richtungen hin zu erreichen, weisen die Einbuchtungen 3 eine gleiche polygonale oder gerundete Form auf. Grundsätzlich jedoch ist es auch möglich, dass der Schaft 5 mit Einbuchtungen 3 anderer Form versehen ist, beispielsweise mit Keilform. Möglich ist es auch, an einem Schaft 5 Einbuchtungen 3 unterschiedlicher Form vorzusehen.

In Fig. 3 ist eine alternative Ausführurigsform dargestellt. In diesem Fall sind anstelle außenseitiger Einbuchtungen 3 (siehe Fig. 1 und Fig. 2) innenseitig Schlitze 4 vorgesehen, die sich radial in den Schaft 5 erstrecken, diesen jedoch nicht durchsetzen. Derartige Schlitze 4 können durch Umformen auf einfache Weise in den Schaft 5 einer Hülse 1 eingebracht werden. Dabei können die Schlitze 4 auch nachträglich zur Innenseite hin geschlossen werden, ohne dass deren Wirkung beim Setzen eines Nietes 2 verloren gehen würde (Fig. 4). Die Schlitze 4 müssen nicht unbedingt entweder innen- oder außenseitig angebracht werden, sondern können durchaus auch sowohl innen- wie auch außenseitig vorliegen.

Wenngleich in Fig. 1 und Fig. 2 nicht gezeigt, können auch Nietdorne mit vorzugsweise am Kopf des Nietdornes anschließenden Rippen zum Einsatz kommen. In diesem Fall ist ein Außendurchmesser des Nietdornes im Rippenbereich größer als ein Innendurchmesser der Hülse im Schaftbereich. Dadurch kann eine radiale Aufweitung des Schaftes zusätzlich unterstützt werden. Um ein Einziehen zu erleichtern, weisen die Rippen bevorzugt ein abgeschrägtes bzw. keilartiges Ende auf.

Um die Ausbildung eines Schließkopfes zu erleichtern, kann vorgesehen sein, dass die Hülse 1 im Bereich eines dem Setzkopf 13 gegenüberliegenden Endes an die Einbuchtung 3 und/oder den Schlitz 4 anschließend oder beabstandet dazu radiale Ausnehmungen oder Rillen aufweist, die vorzugsweise so ausgeformt sind, dass ein Durchmesser des Schließkopfes zumindest das 1,4-fache des Durchmessers des Nietdornes 8 beträgt.

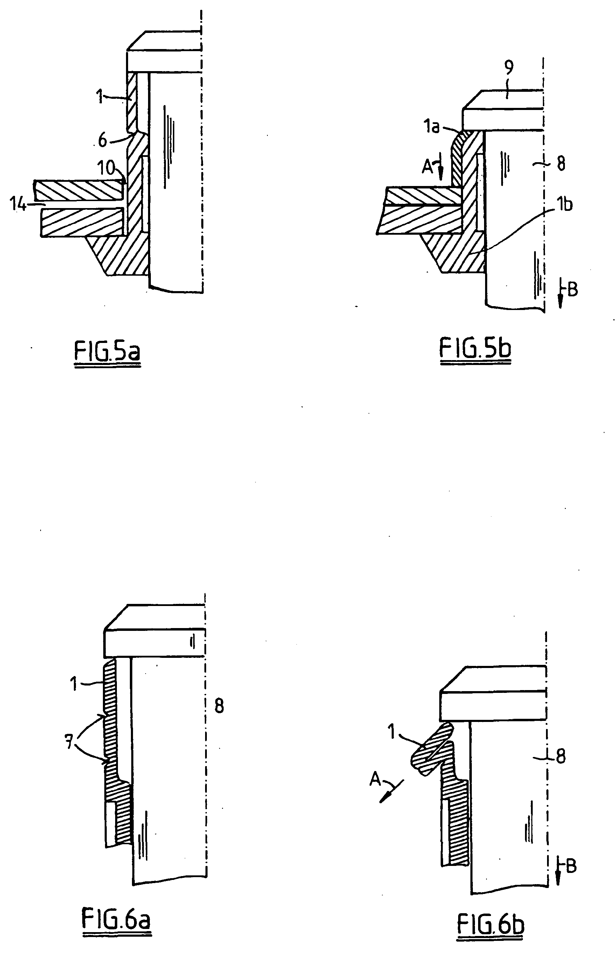

In besonders bevorzugten Ausführungsformen der Erfindung ist im Schaft 5 einer Hülse 1 zusätzlich zu den Einbuchtungen 3 bzw. den Schlitzen 4 außenseitig zumindest eine Sollbruchstelle 6 oder Sollverformungsstelle 7 vorgesehen. Dabei sind Sollbruchstellen 6 bzw. Sollverformungsstellen 7 vom Kopf 9 des Nietdornes 8 ausgehend in einem ersten Teilabschnitt angeordnet, noch vor den Einbuchtungen 3 bzw. Schlitzen 4, die in einem zweiten Teilbereich angeordnet sind (siehe Fig. 5a und 6a).

Wird nun, wie in Fig. 5b dargestellt, der Nietdorn 8 entlang Richtung B gezogen und derart eine axiale Zugkraft auf einen endseitigen Teil der Hülse 1 bzw. deren Schaft 5 ausgeübt, so kommt es im Bereich der Sollbruchstelle 6 zum Bruch der Hülse 1 in zwei Teile 1a, 1b und der Teil 1 a wird über den Teil 1 b der Hülse 1 geschoben. Im Zuge des Setzvorganges bewirkt dies, dass entlang Richtung A eine axiale Kraft auf die zu verbindenden Werkstücke ausgeübt wird, wodurch ein lateraler Spalt 14 (Fig. 5a) geschlossen wird, noch ehe es zu einer Aufweitung des Hülsenteiles 1 b und schließlich zu einer Ausbildung eines Schließkopfes kommt. In diesem Fall können sowohl der laterale Spalt 14 als auch der radiale Spalt 10 in Fig. 5a beim Setzen des Nietes 2 geschlossen werden. Damit im Einklang zeichnet sich eine so erstellte Verbindung durch eine besonders hohe Belastbarkeit aus.

Eine ähnliche Wirkung kann durch Sollverformungsstellen 7, wie sie in Fig. 6a ersichtlich sind, erreicht werden. In diesem Fall kommt es bei einer Ausübung einer Zugkraft in Richtung B zuerst zu einem Knicken der Hülse 1, sodass im endseitigen Bereich der Hülse 1 ein Kegelstumpf gebildet wird. Dieser sorgt bei weiterem Einziehen des Nietdornes 8 in Richtung B dafür, dass im Wesentlichen in Richtung A eine Kraft auf die zu verbindenden Werkstücke ausgeübt wird. Auch in diesem Fall können laterale Spalte 14 zwischen zu verbindenden Werkstücken geschlossen und hochbelastbare Verbindungen erreicht werden.

Eine Querschnittsfläche und eine Anzahl an Einbuchtungen 3 bzw. Schlitzen 4 wird vorzugsweise so gewählt, dass sich beim Einziehen des Nietdornes 8 zuerst im Wesentlichen der Schaft 5 radial nach außen verformt und erst anschließend das freie Ende des Schaftes 5 zu einem Schließkopf umgeformt wird.

Zusammenhängend damit kann aus den gleichen Gründen auch vorgesehen sein, dass sich die Einbuchtungen/Schlitze lediglich über einen Teilbereich des Schaftes 5 erstrecken, und zwar zwischen dem Setzkopf 13 und jenem Bereich des Schaftes 5, welcher zu einem Schließkopf verformt wird (siehe Fig. 5a).

Wenngleich das erfindungsgemäße Konzept für Blindniete beispielhaft dargestellt wurde, kann dieses auch für Hohlniete angewendet werden. Auch Abwandlungen der vorstehenden Beispiele, zum Beispiel mehrteilig ausgebildete Hülsen mit getrenntem Schaft und Setzkopf, sind im Rahmen der Erfindung möglich. Ebenso ist es ohne Weiteres möglich, das erfindungsgemäße Konzept bei Schließringbolzen zur Anwendung zu bringen.

## Patentansprüche

1. Niet (2) zum Verbinden von Werkstücken (11, 12), insbesondere Blindniet, aufweisend eine Hülse (1) mit einem Schaft (5) und einem verbreiterten Setzkopf (13) sowie einen Nietdorn (8) mit einem Kopf (9), wobei ein dem Setzkopf (13) gegenüberliegendes Ende des Schaftes (5) gegebenenfalls durch Einziehen des Nietdornes (8) in die Hülse (1) zu einem Schließkopf verformbar ist, **dadurch gekennzeichnet, dass** im Schaft (5) mehrere axial verlaufende Einbuchtungen (3) und/oder Schlitze (4) vorgesehen sind, welche Einbuchtungen (3) bzw. Schlitze (4) beim Setzen des Nietes (2) ein radiales Aufweiten des Schaftes (5) der Hülse (1) zu den Werkstücken (11, 12) hin bewirken, und der Nietdorn (8) außenseitig Rippen mit parallel zum Nietdorn (8) verlaufenden Konturen aufweist, welche die Hülse (1) beim Einziehen des Nietdornes (8) radial aufweiten, wobei die Rippen an der Hülse (1) in Bereichen zwischen den Einbuchtungen (3) und/oder Schlitzen (4) anliegen.

2. Niet (2) nach Anspruch 1, **dadurch gekennzeichnet, dass** die Einbuchtungen (3) und/oder Schlitze (4) am Schaft (5) außenseitig angeordnet sind.

3. Niet (2) nach Anspruch 1, **dadurch gekennzeichnet, dass** die Einbuchtungen (3) und/oder Schlitze (4) am Schaft (5) innenseitig angeordnet sind.

4. Niet (2) nach einem der Ansprüche 1 bis 3, **dadurch gekennzeichnet, dass** der Schaft (5) drei oder mehr Einbuchtungen (3) und/oder Schlitze (4) aufweist.

5. Niet (2) nach einem der Ansprüche 1 bis 4, **dadurch gekennzeichnet, dass** mehrere Einbuchtungen (3) und/oder Schlitze (4) vorgesehen sind, welche parallel zur Hülsenachse (X) verlaufen und vorzugsweise rotationssymmetrisch um diese angeordnet sind.

6. Niet (2) nach Anspruch 5, **dadurch gekennzeichnet, dass** die Einbuchtungen (3) und/oder Schlitze (4) etwa von jenem Bereich weg verlaufen, in welchem der Schaft (5) an den Setzkopf (13) anschließt.

7. Niet (2) nach einem der Ansprüche 1 bis 6, **dadurch gekennzeichnet, dass** die Hülse (1) außenseitig zumindest eine vorzugsweise radial umfänglich verlaufende Sollbruchstelle (6) derart aufweist, dass ein endseitiger Teil der Hülse (1) durch Einwirken einer Kraft in Richtung der Hülsenachse (X) um einen verbleibenden Teil der Hülse (1) herum axial verschiebbar ist.

8. Niet (2) nach einem der Ansprüche 1 bis 6, **dadurch gekennzeichnet, dass** die Hülse (1) außenseitig zumindest eine vorzugsweise radial umfänglich verlaufende Sollverformungsstelle (7) derart aufweist, dass ein endseitiger Teil der Hülse (1) durch Einwirken einer Kraft in Richtung der Hülsenachse (X) unter Ausbildung eines Kegelstumpfes um den verbleibenden Teil der Hülse (1) verformbar ist.

9. Niet (2) nach Anspruch 1, **dadurch gekennzeichnet, dass** die Hülse (1) endseitig Führungsnasen für die Rippen aufweist.

10. Niet (2) nach Anspruch 9, **dadurch gekennzeichnet, dass** die Rippen am Kopf (9) des Nietdornes (8) anschließen.

11. Niet (2) nach Anspruch 9 oder 10, **dadurch gekennzeichnet, dass** die Rippen in Richtung zum Setzkopf (13) hin keilförmig ausgebildet sind.

12. Niet (2) nach einem der Ansprüche 1 bis 6, **dadurch gekennzeichnet, dass** die Hülse (1) im Bereich eines dem Setzkopf (13) gegenüberliegenden Endes an die Einbuchtung (3) und/oder den Schlitz (4) anschließend oder beabstandet dazu radiale Ausnehmungen oder Rillen aufweist.

13. Verfahren zum Verbinden von mit Bohrungen versehenen Werkstücken (11, 12) mit einem Niet (2), insbesondere Blindniet, der in den Bohrungen der Werkstücke (11, 12) positioniert wird, wobei ein Spalt (10) zwischen einem Schaft (5) des Nietes (2) und zumindest einem der Werkstücke (11, 12) erhalten bleibt, wonach der Niet (2) unter Ausbildung eines Schließkopfes gesetzt wird, **dadurch gekennzeichnet, dass** der Niet (2) gemäß einem der Ansprüche 1 bis 12 ausgebildet ist und der Schaft (5) beim Setzen des Nietes (2) radial zu den Werkstücken (11, 12) hin aufgeweitet wird und gleichzeitig und/oder anschließend eine Ausbildung des Schließkopfes erfolgt.

14. Verfahren nach Anspruch 13, **dadurch gekennzeichnet, dass** zwei Werkstücke (11, 12) miteinander verbunden werden.

## Claims

1. A rivet (2) for connecting workpieces (11, 12), in particular blind rivet, having a sleeve (1) with a shaft (5) and a widened swage-head (13) and as well as rivet mandrel (8) with a head (9), wherein an end of the shaft (5) opposing the swage-head (13) can optionally be deformed into a closing head by pulling the rivet mandrel (8) into the sleeve (1), **characterized in that** a plurality of axially extending indentations (3) and/or slots (4) are provided in the shaft (5), which indentations (3) or slots (4) effect a radial widening of the shaft (5) of the sleeve (1) towards the workpieces (11, 12) during setting the rivet (2), and the rivet mandrel (8) has ribs on the outside with contours which extend parallel to the rivet mandrel (8) and which radially widen the sleeve (1) during pulling in the rivet mandrel (8), wherein the ribs abut against the sleeve (1) in the region between the indentations (3) and/or the slots (4).

2. The rivet (2) according to claim 1, **characterized in that** the indentations (3) and/or slots (4) are arranged on the outside of the shaft (5).

3. The rivet (2) according to claim 1, **characterized in that** the indentations (3) and/or slots (4) are arranged on the inside of the shaft (5).

4. The rivet (2) according to any one of the claims 1 to 3, **characterized in that** the shaft (5) has three or more indentations (3) and/or slots (4).

5. The rivet (2) according to any one of the claims 1 to 4, **characterized in that** a plurality of indentations (3) and/or slots (4) are provided which extend parallel to the sleeve axis (X) and are preferably arranged rotationally symmetrical about said axis.

6. The rivet (2) according to claim 5, **characterized in that** the indentations (3) and/or slots (4) extend approximately from that region in which the shaft (5) is adjacent to the swage-head (13).

7. The rivet (2) according to any one of the claims 1 to 6, **characterized in that** the sleeve (1) has on the outside at least one preferably radially circumferentially extending predetermined breaking point (6) in such a manner that by the action of a force in the direction of the sleeve axis (X), an end part of the sleeve (1) is axially displaceable around a remaining part of the sleeve (1).

8. The rivet (2) according to any one of the claims 1 to 6, **characterized in that** the sleeve (1) has on the outside at least one preferably radially circumferentially extending predetermined deforming point (7) in such a manner that by the action of a force in the direction of the sleeve axis (X), an end part of the sleeve (1) is deformable around the remaining part of the sleeve (1) thereby forming a truncated cone.

9. The rivet (2) according to claim 1, **characterized in that** the end side of the sleeve (1) has guide noses for the ribs.

10. The rivet (2) according to claim 9, **characterized in that** the ribs are adjacent to the head (9) of the rivet mandrel (8).

11. The rivet (2) according to claim 9 or 10, **characterized in that** the ribs are formed tapered in the direction towards the swage-head (13).

12. The rivet (2) according to any one of the claims 1 to 6, **characterized in that** in the region of an end opposing the swage-head (13), the sleeve (1) has radial recesses or grooves which are adjacent to the indentation (3) and/or the slot (4) or are spaced apart therefrom.

13. A method for connecting workpieces (11, 12) having boreholes by means of a rivet (2), in particular blind rivet, which is positioned in the boreholes of the workpiece (11, 12), wherein a gap (10) is maintained between a shaft (5) of the rivet (2) and at least one of the workpieces (11, 12), whereupon the rivet (2) is set thereby forming a closing head, **characterized in that** the rivet (2) is configured according to any one of the claims 1 to 12, and the shaft (5) is radially widened towards the workpieces (11, 12) during setting of the rivet (2) and, at the same time and/or subsequently, a formation of the closing head takes place.

14. The method according to claim 13, **characterized in that** two workpieces (11, 12) are being connected to each other.

## Revendications

1. Rivet (2) pour relier des pièces d'oeuvre (11, 12), notamment rivet borgne, comportant une douille (1) avec une tige (5) et une tête d'appui (13) élargie, ainsi qu'un boulon de rivet (8) avec une tête (9), une extrémité de la tige (5) opposée à la tête d'appui (13) étant déformable le cas échéant en une deuxième tête, par introduction du boulon de rivet (8) dans la douille (1), **caractérisé en ce que** dans la tige (5) sont prévus plusieurs creux (3) et/ou échancrures (4) s'étendant en direction axiale, lesquels creux (3) ou lesquelles échancrures (4) provoquant au placement du rivet (2) un élargissement radial de la tige (5) de la douille (1) en direction des pièces d'oeuvre (11, 12) et le boulon de rivet (8) comportant sur sa face extérieure des nervures avec des contours s'étendant à la parallèle du boulon de rivet (8), lesquelles élargissent la douille (1) en direction radiale, lors de l'introduction du boulon de rivet (8), les nervures étant adjacentes à la douille (1) dans des zones situées entre les creux (3) et/ou les encoches (4).

2. Rivet (2) selon la revendication 1, **caractérisé en ce que** les creux (3) et/ou encoches (4) sont placées sur la face extérieure de la tige (5).

3. Rivet (2) selon la revendication 1, **caractérisé en ce que** les creux (3) et/ou les encoches (4) sont placé(e)s sur la face interne de la tige (5).

4. Rivet (2) selon l'une quelconque des revendications 1 à 3, **caractérisé en ce que** la tige (5) comporte trois creux (3) et/ou encoches (4) ou plus.

5. Rivet (2) selon l'une quelconque des revendications 1 à 4, **caractérisé en ce qu'**il est prévu plusieurs creux (3) et/ou encoches (4) qui s'étendent à la parallèle de l'axe de la douille (X) et qui sont placé(e)s de préférence de façon symétrique en rotation autour de celui-ci

6. Rivet (2) selon la revendication 5, **caractérisé en ce que** les creux (3) et/ou les encoches (4) partent approximativement de la zone dans laquelle la tige (5) se raccorde sur la tête d'appui (13).

7. Rivet (2) selon l'une quelconque des revendications 1 à 6, **caractérisé en ce que** la douille (1) comporte sur sa face extérieure au moins une zone de rupture théorique (6) s'étendant de préférence sur la périphérie en direction radiale, de telle sorte que sous l'effet d'une force en direction de l'axe de la douille (X), une partie d'extrémité de la douille (1) soit déplaçable en direction axiale autour d'une partie restante de la douille (1).

8. Rivet (2) selon l'une quelconque des revendications 1 à 6, **caractérisé en ce que** la douille (1) comporte sur sa face extérieure au moins un point de déformation théorique (7) s'étendant de préférence sur la périphérie en direction radiale, de sorte que sous l'effet d'une force en direction de l'axe de la douille (X), une partie d'extrémité de la douille (1) soit déformable autour de la partie restante de la douille (1), en formant un cône tronqué.

9. Rivet (2) selon la revendication 1, **caractérisé en ce que** la douille (1) comporte côté extrémité des tenons de guidage pour les nervures.

10. Rivet (2) selon la revendication 9, **caractérisé en ce que** les nervures se raccordent sur la tête (9) du boulon de rivet (8).

11. Rivet (2) selon la revendication 9 ou 10, **caractérisé en ce que** les nervures sont conçues sous forme cunéiforme en direction de la tête d'appui (13).

12. Rivet (2) selon l'une quelconque des revendications 1 à 6, **caractérisé en ce que** dans la zone d'une extrémité opposée à la tête d'appui (13), la douille (1) comporte des évidements ou des cannelures se raccordant au creux (3) et/ou à l'encoche (4) ou à distance de ces derniers et radiales par rapport eux.

13. Procédé d'assemblage de pièces d'oeuvre (11, 12) munies de perçage avec un rivet (2), notamment un rivet borgne, que l'on positionne dans les perçages des pièces d'oeuvre (11, 12) en ménageant une fente (10) entre une tige (5) du rivet (2) et au moins l'une des pièces d'oeuvre (11, 12), suite à quoi, on pose le rivet (2) en formant une seconde tête, **caractérisé en ce que** le rivet (2) est conçu selon l'une quelconque des revendications 1 à 12 et **en ce qu'**au placement du rivet (2), la tige (5) s'élargit en direction radiale, par rapport aux pièces d'oeuvre (11, 12) et que la seconde tête se forme simultanément et/ou par la suite.

14. Procédé selon la revendication 13, **caractérisé en ce qu'**on assemble entre elles deux pièces d'oeuvre (11, 12).
